# FASCICULE DE BREVET EUROPEEN

(11) **EP 3 872 831 B1**
(45) Date de publication et mention de la délivrance du brevet: **05.06.2024**
(21) Numéro de dépôt: 21159209.2
(22) Date de dépôt: 25.02.2021
(51) Int. Cl.: H01H 37/76, H01C 7/12

(54) **APPAREIL ÉLECTRIQUE CONTRE LES SURTENSIONS TRANSITOIRES ET UN DISPOSITIF DE VARISTANCES À DÉTECTION D'EMBALLEMENT THERMIQUE**
FÜR TRANSIENTE ÜBERSPANNUNGEN UND BLITZSCHUTZ GEEIGNETER ÜBERSPANNUNGSABLEITER UND VORRICHTUNG MIT VARISTOREN MIT DETEKTION EINER THERMISCHEN ÜBERLAST
TRANSIENT OVERVOLTAGE AND LIGHTNING PROTECTION APPARATUS AND DEVICE COMPRISING VARISTORS WITH DETECTION OF THERMAL OVERLOAD

(30) Priorité: 27.02.2020 FR 2001942
(43) Date de publication de la demande: 01.09.2021
(73) Titulaire: Legrand France, 87000 Limoges (FR); Legrand SNC, 87000 Limoges (FR)
(72) Inventeur: RASSE, Gaëtan, 87700 BEYNAC (FR)
(74) Mandataire: Cabinet Camus Lebkiri

(56) Documents cités:
- EP-A1- 2 375 425
- WO-A1-2008/009513
- WO-A1-2016/110359
- DE-A1-102010 008 537

## Description

### DOMAINE TECHNIQUE DE L'INVENTION

Le domaine technique de l'invention est celui des parasurtenseurs tels que les parafoudres à varistances, comprenant des appareils électriques contre les perturbations électriques, notamment contre les surtensions transitoires dues notamment à un impact de foudre.

La présente invention concerne un appareil électrique contre les surtensions transitoires dans lequel est installé un dispositif de varistances à détection d'emballement thermique comprenant des varistances, et en particulier l'invention concerne la déconnexion des varistances due à un emballement thermique.

### ARRIERE-PLAN TECHNOLOGIQUE DE L'INVENTION

Il est connu d'assurer la protection d'une installation électrique contre les surtensions à l'aide d'appareil électrique contre les surtensions transitoires dans lequel est monté au moins un composant de protection contre les surtensions, en particulier une ou plusieurs varistances. Les varistances permettent d'écrêter les surtensions à partir d'une valeur connue, et permettent ainsi de limiter la propagation de la surtension sur le réseau électrique. Dans les cas les plus fréquents, une varistance est branchée entre une phase et le neutre de l'installation électrique. Dans le cas d'une tension nominale, la résistance de la varistance est suffisamment importante pour ne pas avoir de courant ou un faible courant de fuite généralement quelques centaines de micro-ampères, et en cas de surtension, la résistance de la varistance chute permettant la décharge vers la terre et ainsi protéger l'installation électrique.

Cependant, il est nécessaire de déconnecter la varistance du réseau électrique lorsqu'elle arrive en fin de vie. En effet, la varistance se détériore à chaque surtension en ayant son impédance qui diminue. Le courant de fuite qui traverse la varistance augmente ce qui se traduit par une augmentation de la production de la chaleur par perte joules qui est fonction de cette impédance. Plus l'impédance est faible, plus le courant de fuite est important et donc produit un échauffement pouvant entraîner une surchauffe, voir un départ de feu dans une tableau électrique comprenant l'appareil électrique contre les surtensions transitoires comprenant la varistance. Dans ce cas, on parle d'emballement thermique de la varistance.

Lors de la fin de vie de la varistance, il existe donc deux phénomènes possibles, soit un court-circuit (la varistance est détruite reliant la phase à la terre ou la phase au neutre ou entre phase), soit l'emballement thermique expliqué ci-dessus.

Pour le court-circuit, Il est connu d'installer un organe de déconnexion électrique (disjoncteur ou fusible) en série avec l'appareil électrique contre les surtensions transitoires, l'ensemble étant en parallèle de l'installation du tableau électrique, juste en aval de la première protection principale du tableau électrique.

Pour éviter le problème d'emballement thermique dans l'installation électrique, les appareils électriques contre les surtensions transitoires comportent une déconnexion thermique de la varistance qui déconnecte celle-ci du réseau en cas d'échauffement important. Cette déconnexion thermique doit réagir très rapidement selon la norme NF EN 61643-11 (déconnexion en moins de 5s pour l'essai de défaillance) mais tout en maintenant les caractéristiques de protection foudre.

La déconnexion thermique sert à déconnecter électriquement la varistance de l'installation électrique à protéger en cas d'échauffement excessif de la varistance, par exemple au-delà de 150°C. La déconnexion thermique comprend souvent une soudure basse température maintenant en place un élément conducteur électriquement contraint élastiquement contre une borne de la varistance, la soudure fond au-delà d'une température prédéterminée et entraine une déconnexion de la varistance permettant le déplacement de cet élément avec pour effet d'ouvrir le circuit de la varistance. Le document FR2 984 006 décrit une telle déconnexion.

Notamment il est connu dans la norme au moins trois type d'appareil électrique contre les surtensions transitoires, type 1, type 2, type 3. L'appareil électrique contre les surtensions transitoires de type 1 est capable d'écouler un courant de foudre très important, généralement de la terre vers le réseau de distribution d'énergie ou l'inverse. L'appareil électrique contre les surtensions transitoires type 2 permet d'écouler les courants générés par des coups de foudres indirects et provoquant des surtensions induites ou conduites sur le réseau de distribution d'énergie. L'appareil électrique contre les surtensions transitoires type 3 est installé en complément des types 2 pour réduire la surtension aux bornes des équipements sensibles. Leur capacité d'écoulement de courant est très limitée. En conséquence ils ne peuvent être utilisés seuls.

Il existe donc pour les hautes puissances, il est connu d'utiliser des appareils électriques contre les surtensions transitoires de type 1 ou type 1+2 dans lequel plusieurs varistances sont montés, appelées aussi dispositif de varistances ou encore une varistance double lorsqu'il y a en a que deux.

De manière générale, la déconnexion thermique pour les dispositifs de varistances est une connexion par une soudure entre la borne de connexion de chaque varistance et une patte de connexion électrique de l'appareil électrique contre les surtensions transitoires, qui fond au-delà d'une température prédéterminée permettant à la patte de connexion électrique de s'écarter de la borne de la varistance et donc déconnecte la varistance. Ainsi, la soudure est située entre la varistance et la patte de connexion de l'appareil et la déconnecte dès que la température prédéterminée est atteinte. C'est notamment le cas du document EP 2 633 530. Enfin, pour éviter la formation d'arc électrique entre la borne de connexion de la varistance et la patte de connexion, il peut avoir un écran isolant qui se déplace entre la borne de connexion de la varistance et la patte de connexion permettant d'éteindre un arc électrique. Le document FR2869155 résout ce problème en ajoutant des écrans isolants qui se déplace entre la patte de connexion et la borne de connexion ainsi qu'entre la patte de connexion et une borne de connexion de l'appareil. Ce document montre un tel système lorsqu'il y a deux varistances en parallèle. De plus, le document EP 2 375 425 A1 divulgue un appareil selon le préambule de la revendication 1.

Un problème de ces déconnexions est d'une part que, comme la soudure a une résistance, elle produit de la chaleur par perte joules par le courant la traversant qui ne correspond pas à celle de la varistance. Ainsi la déconnexion thermique peut être effectuée alors que la varistance est encore utilisable. En outre la résistance d'une varistance défectueuse produit un effet indésirable sur le reste du réseau de l'installation.

Il est connu aussi des organes thermosensibles tels que des bilames permettant de se déformer au-delà d'une température prédéterminée. Cependant de telles organes thermosensibles sont volumineux et se détériore à chaque montée en température pouvant ainsi se déformer avant la fin de vie de la varistance. Enfin de tels organes thermosensibles peuvent se déformer trop lentement lorsque la température prédéterminée est atteinte en particulier si celle-ci est montée rapidement et est très éloignée de la température ambiante.

En outre dans ces appareils électriques comprenant un dispositif de varistances, dans le cas d'une varistance déconnectée, l'autre ou les autres varistances reste(nt) connectée(s) et l'appareil électrique contre les surtensions transitoires n'est plus de type 1 ou 1+2 du fait qu'une seule des varistances est déconnectée ce qui peut entraîner une mauvaise protection en cas d'une surtension importante. Dans le cas d'une varistance détruite ouverte, l'autre varistance devra supporter toute la surtension et dans le cas de la varistance détruite fermé (court-circuité) un déclencheur externe se déclenche.

Ainsi il est nécessaire de trouver un dispositif de protection thermique de composant de protection pour les parafoudres permettant de résister au-delà d'une température prédéterminée pour éviter une déconnexion intempestive dû à certain parafoudre qui monte en température en utilisation normale tout en se déconnectant en moins de 5 secondes au-delà d'une température anormale.

De ce fait il y a un besoin de trouver une autre solution pour ces appareils à double varistances permettant d'assurer la sécurité.

### RESUME DE L'INVENTION

L'invention offre une solution à au moins un des problèmes évoqués précédemment, en permettant d'avoir un système déconnectant l'appareil électrique contre les surtensions transitoires dès lors qu'une des varistances est défaillante.

Un aspect de l'invention concerne un appareil électrique contre les surtensions transitoires comprenant :
- un logement destiné à recevoir un dispositif de varistances à détection d'emballement thermique comprenant au moins un ensemble de varistances comprenant une première varistance et une deuxième varistance,
- une première borne de liaison électrique destinée à être reliée indépendamment à un réseau d'alimentation ou à la terre, comprenant :
   - un premier bras de contact mobile s'étendant dans le logement dans une position initiale pour être en contact avec une première borne de connexion électrique de la première varistance,
   - un deuxième bras de contact mobile s'étendant dans le logement dans une position initiale pour être en contact avec une première borne de connexion électrique de la deuxième varistance,
- un dispositif de protection thermique comprenant :
   - une première zone de déclenchement destinée à se déclencher, lorsqu'un scellement d'un premier détecteur thermique de l'ensemble varistance se descelle, pour provoquer le déplacement du premier bras de contact mobile dans une position déconnectée dans laquelle le deuxième bras de contact mobile est destiné à se déconnecter de la première borne de connexion électrique de la première varistance,
   - une deuxième zone de déclenchement différente de la première zone de déclenchement, apte à se déclencher, lorsque un deuxième scellement d'un deuxième détecteur thermique se descelle, pour provoquer le déplacement du deuxième bras de contact mobile dans une position déconnectée dans laquelle le deuxième bras de contact mobile est destiné à se déconnecter de la première borne de connexion électrique de la deuxième varistance,
   - dans lequel chaque zone de déclenchement est dissociée de la borne de connexion électrique de chaque varistance.

Grâce à l'invention, le dispositif de protection thermique permet d'avoir une déconnection thermique dissociée de la borne de connexion électrique de chaque varistance tout en permettant de déconnecter une varistance défaillante. Ainsi la déconnexion thermique d'une varistance n'est pas influencée par la résistance électrique de contact entre une borne de connexion d'une varistance et la première borne de liaison électrique.

Par scellement, on entend une soudure ou un collage ou un brasage.

Selon un aspect de l'invention, l'invention concerne aussi un dispositif de varistances à détection d'emballement thermique pour un appareil électrique contre les surtensions transitoires décrit précédemment, le dispositif de varistance à détection d'emballement thermique comprenant :
- un ensemble de varistances comprenant :
   - une première et deuxième varistance comprenant chacune indépendamment une patte de déconnexion thermique et une première borne de connexion distinctes des pattes de déconnexion thermique,
   - la première borne de connexion de la première varistance étant destinée à être connectée au premier bras de contact mobile de la première borne de liaison électrique de l'appareil électrique contre les surtensions transitoires pour relier la première varistance au réseau ou la terre de l'installation et
   - la première borne de connexion de la deuxième varistance étant destinée à être connectée au deuxième bras de contact mobile de la première borne de liaison électrique de l'appareil électrique contre les surtensions transitoires pour relier la deuxième varistance au réseau ou la terre de l'installation et
- un premier détecteur thermique et un deuxième détecteur thermique comprenant chacun un scellement fixé à respectivement la première et deuxième patte à déconnexion thermique se descellant au-delà d'une température prédéterminée de sécurité.

Le dispositif de varistance à détection d'emballement thermique comprend ainsi un détecteur thermique et une borne de connexion par varistance distincte des pattes de déconnection et des détecteurs thermiques et cela permet ainsi au détecteur thermique par varistance de détecter une surchauffe de sa varistance sans être influencé par l'échauffement provoqué par le courant traversant la résistance de contact des bornes de connexions aux bras de contact mobile.

L'invention concerne aussi une cassette d'un parasurtenseur comprenant un appareil électrique contre les surtensions transitoires selon l'invention décrit précédemment et un ensemble de varistances selon l'invention décrit précédemment monté dans le logement de l'appareil électrique contre les surtensions transitoires, le premier bras de contact mobile et le deuxième bras de contact mobile de la première borne de liaison électrique étant chacun respectivement dans la position initiale en contact électriquement et physiquement avec la première et la deuxième borne de connexion et en ce que le premier détecteur thermique et le deuxième détecteur thermique sont chacun agencé avec respectivement la première zone de déclenchement et la deuxième zone de déclenchement se déclenchant chacun lorsque respectivement le scellement du premier détecteur thermique provoquant le déplacement du premier bras de contact mobile dans la position déconnectée pour se déconnecter de la première borne de la première varistance, et le scellement du deuxième zone de déclenchement se descelle provoquant le déplacement du premier bras de contact mobile dans la position déconnectée pour se déconnecter de la première borne de la deuxième varistance de la première borne de liaison électrique.

L'invention concerne en outre un parasurtenseur comprenant un socle et une cassette selon l'invention décrite précédemment montée sur le socle, le socle comprenant des bornes de branchement en contact physiquement et électriquement avec les bornes de liaisons pour relier les bornes de liaisons au réseau électrique.

Enfin l'invention concerne aussi un procédé de déconnexion électrique d'un ensemble de varistances de la cassette selon l'invention décrit précédemment comprenant:
- une étape de déscellement du premier ou deuxième détecteur thermique
- suite à l'étape de déscellement, une étape de déclenchement respectivement de la première zone ou de la deuxième zone de déclenchement du dispositif de protection thermique, et
- une étape de déconnexion électrique de la première borne de connexion de respectivement la première ou deuxième varistance de la première borne de liaison électrique en déplaçant respectivement le premier ou deuxième bras mobile de contact de la position initiale à la position déconnectée.

Outre les caractéristiques qui viennent d'être évoquées dans le paragraphe précédent, l'appareil électrique contre les surtensions transitoires selon un aspect de l'invention peut présenter une ou plusieurs caractéristiques complémentaires parmi les suivantes, considérées individuellement ou selon toutes les combinaisons techniquement possibles :
Selon un premier mode de réalisation de l'appareil électrique contre les surtensions transitoires, le déclenchement d'une des deux zones de déclenchement entraine la déconnexion électrique de l'ensemble des varistances en déplaçant chaque bras mobile de contact vers la position déconnectée.

Par déconnecter électriquement l'ensemble des varistances, on entend déconnecter électriquement toutes les varistances de l'ensemble des varistances.

Ainsi, dès qu'une des varistances est défectueuse, l'ensemble des varistances est déconnecté permettant ainsi de ne pas protéger l'installation selon une mauvaise protection en cas d'une surtension importante et ainsi inciter l'utilisateur à changer au moins l'ensemble varistances.

Selon une variante du mode de réalisation précédent, le déclenchement d'une des deux zones de déclenchement entraine uniquement la déconnexion électrique de varistance correspondante en déplaçant le bras mobile de contact correspondant vers la position déconnectée.

Selon un mode de réalisation de l'appareil électrique contre les surtensions transitoires, dans lequel la première borne de liaison électrique comprend une épingle comprenant une partie centrale destinée à être reliée à une première borne de raccordement de phase pour être reliée au réseau ou à la terre et en ce que chaque bras de contact mobile par varistance, est contraint élastiquement en position initiale, qui est connectée avec la première borne de connexion et en ce que le dispositif de protection thermique est agencé pour libérer chaque bras mobile de la borne de connexion de la varistance correspondante en position déconnectée lors du déclenchement de la zone de déclenchement correspondante.

Selon un mode de réalisation, la première borne de liaison est connectée à la terre ou à une phase ou à un neutre du réseau et en ce qu'il comprend une deuxième borne de liaison connectée respectivement à une phase ou à un neutre du réseau ou à la terre et comprend une patte de connexion pour se connecter électriquement et physiquement à une deuxième borne de connexion de l'ensemble de varistance.

Selon un mode de réalisation de la cassette comprenant un appareil selon le mode de réalisation précédent , chaque bras de la première borne de liaison électrique est plaqué contre la première borne de connexion de la varistance correspondante formant un contact électrique.

Selon un mode de réalisation du dispositif de varistances à détection d'emballement thermique, l'ensemble varistance comprend une deuxième borne de connexion située électriquement à l'opposé de l'au moins une première borne de connexion.

Selon un mode de réalisation de l'appareil électrique contre les surtensions transitoires, l'appareil comprend en outre une deuxième borne de liaison électrique adaptée à être connectée à une deuxième borne de connexion de l'ensemble de varistances.

Selon un mode de réalisation de la cassette comprenant un appareil selon le mode de réalisation précédent et un dispositif de varistance selon le mode de réalisation précédent, la deuxième borne de liaison électrique est en contact électriquement et physiquement avec la deuxième borne de connexion de l'ensemble de varistances.

Selon une mise en oeuvre de cet exemple, chaque bras de contact mobile est déformé élastiquement par le dispositif de protection thermique en position initiale et en ce que le déplacement du dispositif de protection thermique, lors du déclenchement correspondant, en position déconnectée libère le bras de contact mobile correspondant en position déconnectée, en revenant dans sa forme initiale dans la position déconnectée.

Selon une mise en oeuvre de cet exemple, chaque bras de contact mobile est naturellement en contact avec la première borne de connexion correspondante en position initiale, le dispositif de protection thermique peut assurer un plaquage de chaque bras de contact mobile contre la première borne de connexion et en ce que le déplacement du dispositif de protection thermique en position déconnectée écarte chaque bras de contact mobile de sa forme initiale vers une position déconnectée déformée élastiquement.

Selon un exemple du premier mode de réalisation décrit précédemment, le déplacement du dispositif de protection thermique, lors du déclenchement correspondant, en position déconnectée libère chaque bras de contact mobile en position déconnectée.

Selon un mode de réalisation comprenant les caractéristiques du premier mode de réalisation, le dispositif de protection thermique comprend un cavalier mobile entre une position initiale et une position déconnectée, dans laquelle le cavalier comprend la première et la deuxième zone de déclenchement, chaque zone de déclenchement étant une butée par varistance destinée pour être retenue par le détecteur thermique correspondant.

Selon une variante comprenant les caractéristiques de la variante du premier mode de réalisation du premier mode de réalisation, le dispositif de protection thermique comprend un premier et un deuxième cavalier comprenant chacun respectivement la première et la deuxième zone de déclenchement, chaque zone de déclenchement étant une butée par varistance destinée pour être retenue par le détecteur thermique correspondant et en ce que chaque cavalier est mobile en se déplaçant d'une position initiale à une position déconnectée lorsque sa zone de déclenchement est déclenchée.

Selon un exemple de ces deux modes de réalisation comprenant un ou des cavaliers, le dispositif de protection thermique comprend un moyen de déplacement élastique par cavalier, comprenant une position comprimée contre le cavalier en position initiale et une position détendue contre le cavalier en position déconnectée.

Par détendu, on entend détendu par rapport à la position comprimée. Autrement dit en position détendue, le moyen de déplacement élastique peut être comprimé en position déconnectée mais moins comprimé (plus détendu) qu'en position connecté.

Selon une mise en oeuvre de cet exemple, le moyen élastique est monté, comprimé, entre le cavalier et une paroi d'appui de l'appareil électrique contre les surtensions transitoires.

Le moyen élastique peut comprendre deux ressorts de déplacement agencés par exemple de façon concentriques. Cela permet d'améliorer la force de pression pour ouvrir le contact d'alimentation et d'écarter le bras mobile correspondant ou les bras mobiles de chaque borne de connexion des varistances.

Le moyen élastique peut être en appui contre un cache amovible permettant ainsi d'installer le moyen de déplacement en dernier lors du procédé de fabrication du dispositif de protection thermique.

Selon un exemple du mode de réalisation comprenant le cavalier, le cavalier comprend :
- un verrou rotatif en appui sur les deux pattes de retenu en position initiale,
- un séparateur isolant,
- et en ce que lorsqu'il y a un descellement d'un scellement à déconnexion thermique d'une varistance en fin de vie, le verrou rotatif se déplace de la position initiale à la position déconnectée en se déplaçant en rotation et en translation permettant de s'éloigner de l'au moins un scellement et le séparateur isolant se déplace de la position initiale à la position déconnectée en translation en s'interposant dans un contact d'alimentation entre respectivement, le premier ou deuxième bras mobile et la première borne de connexion électrique de la première ou deuxième varistance.

Selon une mise en oeuvre de ces exemples, chaque cavalier ou le cavalier comprend une partie conductrice et en ce que la partie conductrice est en contact électrique avec le premier et/ou le deuxième bras de contact mobile de la première borne de liaison électrique et est destinée à être en contact électriques avec les bornes de connexions des varistances en position initiale et est éloignées des bornes de connexion ou/et des bras de contact mobile de la borne de liaison en position déconnecté.

Selon une mise en oeuvre de ces exemples, le cavalier comprend un écarteur écartant élastiquement le premier et/ou le deuxième bras de contact mobile de la première borne de liaison électrique en position initiale pour être en contact avec les premières bornes de connexion correspondante de la première et deuxième varistance.

Selon un mode de réalisation, l'appareil électrique contre les surtensions transitoires comprend :
- un boîtier comprenant le logement et une fenêtre d'identification, et
- un indicateur d'états comprenant une première marque et une deuxième marque d'indications d'états différentes l'une de l'autre et en ce que l'indicateur d'états est mobile de la position initiale dans lequel la première marque d'indication d'état est visible de l'extérieur par la fenêtre d'identification à une position d'information dispositif défectueux dans lequel le dispositif de protection thermique est en position déconnectée et la deuxième marque d'état est visible de l'extérieur par la fenêtre d'identification.

Selon un exemple de ce mode de réalisation et du mode de réalisation comprenant un cavalier, il y a un indicateur d'états par cavalier et l'indicateur d'états est monté sur le cavalier mobile. Dans le cas d'un seul cavalier, il y a donc un seul indicateur d'état.

Selon une mise en oeuvre de cet exemple, dans lequel le cavalier comprend un séparateur isolant, l'indicateur d'états est situé sur le séparateur isolant.

Selon une variante de cette mise en oeuvre de cet exemple, dans lequel le cavalier comprend un verrou rotatif, l'indicateur d'états est situé sur le verrou rotatif.

Selon un mode de réalisation du dispositif de varistances à détection d'emballement thermique, l'ensemble de varistances comprend par varistance une première plaque de contact conductrice électriquement comprenant la patte de déconnexion thermique et la première borne de connexion de façon distincte l'une de l'autre. Cela permet d'utiliser la plaque de contact pour former la patte de déconnexion thermique afin de simplifier l'ensemble de varistances.

Selon un exemple de ce mode de réalisation du dispositif de varistances à détection d'emballement thermique, comprenant deux ensembles séparés et distinct l'un de l'autre, comprenant chacun une varistance de l'ensemble de varistances, chaque varistance d'un ensemble comprenant :
- la première plaque de contact conductrice électriquement comprenant la patte de déconnexion thermique et la première borne de connexion de façon distincte l'une de l'autre,
- une deuxième plaque latérale pour être connectée à une deuxième borne de liaison de l'appareil et
- un bloc de céramique entre les deux plaques latérales est connecté physiquement et électriquement au bloc de céramique, et
- le premier ou deuxième détecteur thermique scellée à la patte de déconnexion thermique.

La deuxième plaque peut aussi se connecter électriquement à l'autre deuxième plaque de l'autre varistance de l'autre boc qui comprend en outre une borne de liaison pour se connecter à la terre ou au réseau.

Chaque varistance peut avoir un isolant entourant les deux plaques latérales et le bloc de céramique pour la protéger et en ce que les premières et deuxième borne de connexion et la patte de déconnexion thermique s'étendent en dehors de l'isolant.

Selon un autre exemple de ce mode de réalisation du dispositif de varistances à détection d'emballement thermique, l'ensemble de varistances est une varistance double comprenant :
- un bloc de céramique par varistance,
- une plaque de contact centrale entre les deux blocs de céramique,
- dans lequel la première plaque de contact est une plaque de contact latérale contiguë avec un des deux blocs à l'opposé de la plaque de contact centrale, et la deuxième plaque de contact latérale comprenant la patte de déconnexion thermique est contigüe avec l'autre bloc.

Selon un mode de réalisation du dispositif de varistances à détection d'emballement thermique, le scellement est une brasure. Cela permet d'avoir une patte de déconnexion thermique dans une matière permettant une bonne conduction thermique de la varistance à la soudure tel que par exemple du cuivre.

Selon un exemple, la brasure est une brasure comprenant de l'étain et un élément parmi le Zinc, l'argent et le cuivre. Cela permet de fondre sans plomb
Selon une particularité, cette brasure est eutectique et est de préférence Zinc et étain. Cela permet de fondre en moins de 5 secondes et de répondre à nouvelle directive de la Rohs qui interdit l'utilisation du plomb. Cette brasure permet de fondre rapidement en moins de 5 secondes en cas de dépassement de la température au-delà d'un seuil de température de sécurité d'emballement thermique, par exemple une température comprise entre 170 et 250°C.

Selon un mode de réalisation du dispositif de varistances, le premier détecteur thermique et le deuxième détecteur thermique comprennent en outre chacun respectivement une première et une deuxième patte de retenu scellées chacune respectivement à la patte de déconnexion thermique de la première et deuxième varistance pour se desceller à partir d'une température prédéterminée de sécurité.

Selon un mode de réalisation du dispositif de varistances l'ensemble varistance comprend un corps externe isolant entourant chaque composant varistance, le corps externe comprenant :
- deux parois latérales dont au moins une des parois latérales est adjacente d'une paroi latérale d'une varistance adjacente,
- un contour reliant les deux parois latérales et
- en ce que la patte de déconnexion s'étend du contour du corps externe vers l'extérieur en ayant une extrémité à distance du corps externe.

Cela permet de pouvoir accoler plusieurs varistances accolées, la varistance la moins usée (ayant une impédance plus importante) sera chauffée par sa ou ses varistances voisines et ainsi refroidir la varistance voisine sans refroidir la patte de déconnexion. En effet, la varistance a une inertie pouvant réduire la température de la varistance par rapport à cette même varistance utilisée seule. Le fait que la patte de déconnexion s'étend du contour du corps externe permet en outre d'être dans une des zones les plus chaude de la varistance.

Selon un mode de réalisation, chaque varistance comprend une patte de déconnexion thermique et en ce que l'appareil électrique comprend un deuxième dispositif de protection thermique soudé aux deuxièmes pattes de déconnexion thermique de chaque varistance par une autre soudure, le deuxième dispositif de protection thermique étant agencé pour que si une des autre soudures fond, le deuxième dispositif thermique déconnecte l'ensemble des varistances en parallèle .

Cela permet d'avoir une protection thermique redondante dans le cas où une varistance en fin de vie est plus chaude d'un côté d'une patte de déconnexion thermique qu'un autre côté d'une autre patte de déconnexion thermique.

L'invention et ses différentes applications seront mieux comprises à la lecture de la description qui suit et à l'examen des figures qui l'accompagnent.

### BREVE DESCRIPTION DES FIGURES

Les figures sont présentées à titre indicatif et nullement limitatif de l'invention.
[Fig. 1] représente une vue en éclatée d'une cassette comprenant un appareil électrique contre les surtensions transitoires selon un exemple d'un premier mode de réalisation et un dispositif de varistances à détection d'emballement thermique.
[Fig. 2A] représente une vue en perspective d'une partie d'un parasurtenseur comprenant une partie de la cassette selon l'exemple de la figure 1 dans une position initiale.
[Fig. 2B] représente un agrandissement d'une portion de la figure 2A.
[Fig. 2C] représente une vue en perspective d'une partie de la cassette de la figure 1.
[Fig. 2D] représente une vue en perspective du parasurtenseur avec une coupe du dispositif de protection thermique 2.
[Fig. 3A] représente une vue en perspective d'une partie du parasurtenseur dans une position déconnectée.
[Fig. 3B] représente un agrandissement d'une portion de la partie du parasurtenseur de la figure 3A.
[Fig. 4] représente une vue en perspective de la cassette selon l'exemple de la figure 1.
[Fig. 5] représente une vue en perspective du parasurtenseur comprenant la cassette selon l'exemple de la figure 1.
[Fig.6] représente une vue en éclatée d'un exemple d'un ensemble varistance de la cassette de la figure 1.

### DESCRIPTION DETAILLEE

Les figures sont présentées à titre indicatif et nullement limitatif de l'invention.

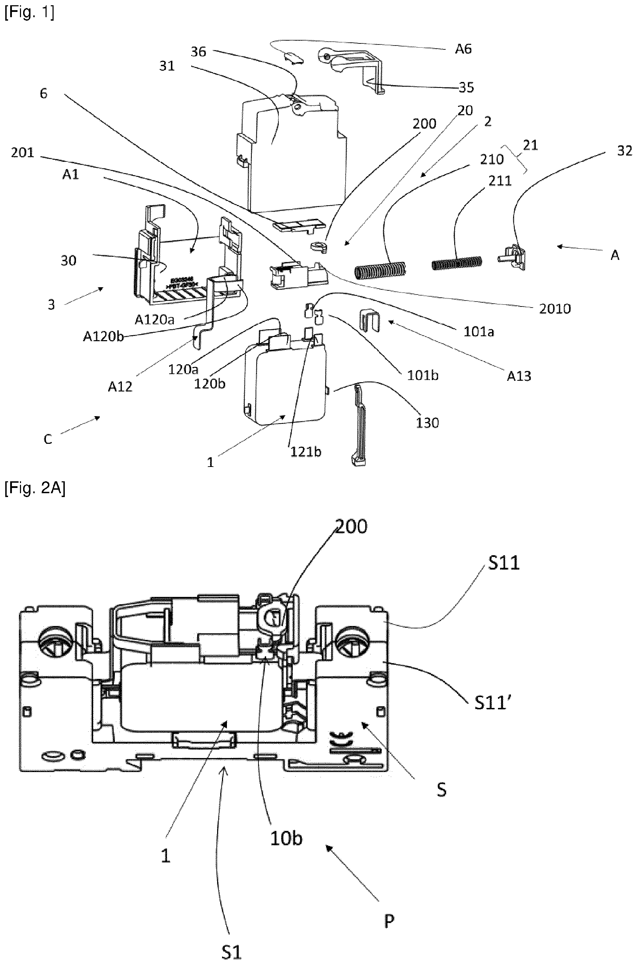

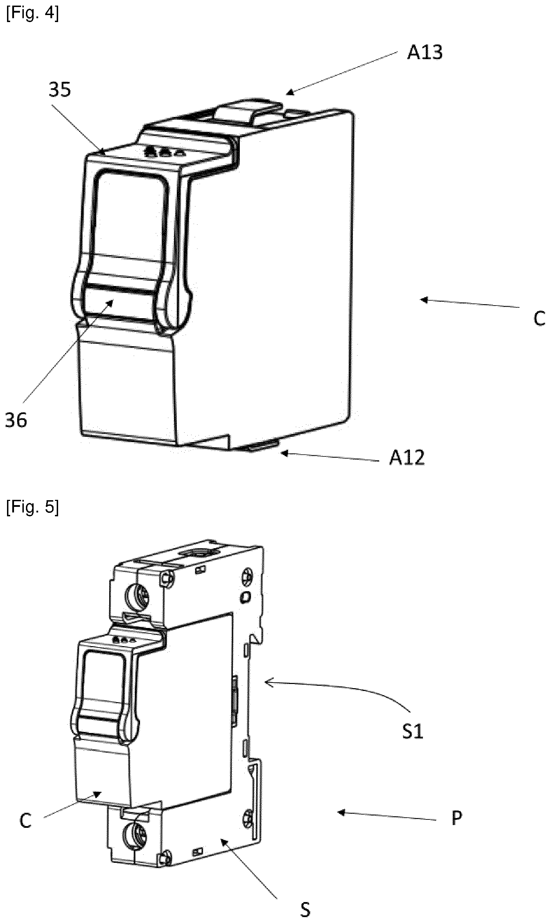

La figure 1 représente une vue en éclatée d'une cassette C visible assemblée sur la figure 4 d'un parasurtenseur P visible sur la figure 5. La cassette C comprend un appareil électrique contre les surtensions transitoires A selon un exemple d'un premier mode de réalisation et un dispositif de varistances à détection d'emballement thermique 1 selon un exemple d'un premier mode de réalisation. L'appareil électrique contre les surtensions transitoires A comprend un logement A1 dans lequel est situé le dispositif de varistances à détection d'emballement thermique 1. L'appareil électrique contre les surtensions transitoires A comprend au moins un dispositif de protection thermique 2 du dispositif de varistances à détection d'emballement thermique 1 décrit ensuite.

Dans cet exemple de ce mode de réalisation, l'appareil électrique contre les surtensions transitoires A comprend un boîtier 3 comprenant des parois formant le logement A1. Le boitier 3 comprend une base 30 et un couvercle 31 s'emboîtant ensemble formant le logement A1.

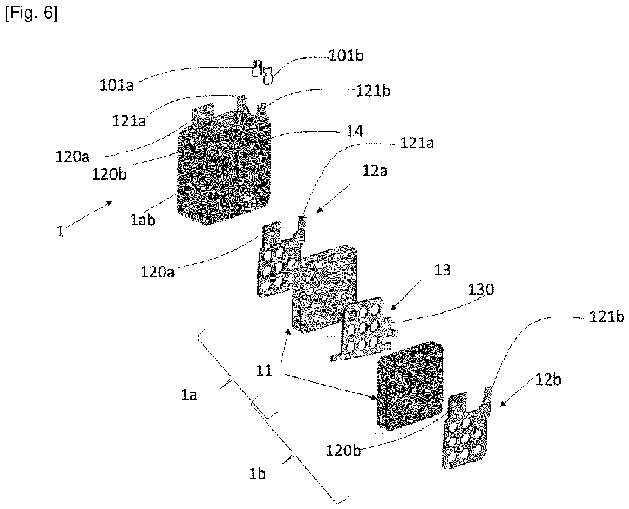

La figure 6 représente une vue en éclatée du dispositif de varistances à détection d'emballement thermique 1 telle que celle représentée sur la figure 1, comprenant un ensemble de varistances 1 ab. Par ensemble de varistances, on entend au moins deux varistances. En outre sur cette figure 6 est représenté l'ensemble de varistances 1ab assemblé.

Dans cet exemple, l'ensemble de varistances 1 ab est une double varistance 1ab comprenant donc deux varistances 1a, 1b. Chaque varistance 1a, 1b comprend chacune un bloc céramique 11 composé d'oxydes métalliques et une première et une deuxième plaque de contact conductrice électriquement 12a, 12b, 13. Dans cet exemple, l'ensemble varistance 1ab comprend une plaque de contact centrale 13 contiguë contre deux faces latérales des deux blocs céramiques et deux plaques de contact latérale 12a, 12b contiguë chacune contre une face latérale d'un bloc céramique 11 correspondant. Ainsi on utilise une seule plaque de contact centrale 13 pour former une borne des deux varistances 1a, 1b, c'est à dire que la plaque de contact centrale 13 fait partie des deux varistances 1a, 1b comprenant chacune en outre le blocs céramique 11 correspondant et la plaque de contact latérale 12a, 12b correspondant.

En l'occurrence les plaques de contact 12a, 12b, 13 sont en cuivre.

Selon un exemple non représenté, l'ensemble de varistances 1ab comprend trois ou plus de blocs céramiques et peut avoir plus de plaques de contact centrale 13, par exemple il peut y avoir Y plaques de contact centrales 13 égale à N bloc céramique moins un.

L'ensemble de varistances 1ab comprend en outre un isolant 14 formant un corps externe de l'ensemble isolant et enveloppant les blocs de céramique 11 et une partie des plaques conductrices latérales 12a, 12b et centrale 13.

Dans cet exemple, l'ensemble varistance 1ab comprend une patte de déconnexion thermique 121a, 121b par varistance 1a, 1b qui est située sur une plaque de contact latérale 12a, 12b et s'étend en dehors de l'isolant 14.

Selon un autre exemple non représenté, la plaque de contact conductrice centrale 13 comprend une patte de déconnexion thermique et donc l'ensemble de varistances comprend trois pattes de déconnexion thermique.

Selon encore une variante non représentée, l'ensemble de varistances comprend une autre plaque de contact thermique par bloc comprenant la patte de déconnexion thermique. Par exemple la plaque de contact thermique est dans une matière ayant une meilleure conductivité thermique que la matière de la plaque de contact conductrice latérale ou centrale.

Chaque varistance 1a, 1b comprend une première borne de connexion électrique 120a, 120b et une deuxième borne de connexion électrique 130. Dans cet exemple, la première borne de connexion électrique 120a, 120b fait partie de la plaque de contact conductrice latérale 12a, 12b et s'étend en dehors de l'isolant et la deuxième borne de connexion électrique 130 fait partie de la plaque de contact conductrice centrale 13 et s'étend en dehors de l'isolant. L'ensemble de varistances 1ab comprend donc dans cette exemple une première borne de connexion électrique 120a, 120b par varistance soit en l'occurrence deux premières bornes de connexion électrique 120a, 120b.

Le dispositif de varistances à détection d'emballement thermique 1 comprend en outre au moins deux détecteurs thermique. Dans ce mode de réalisation, le dispositif de varistances à détection d'emballement thermique 1 comprend un premier détecteur thermique 10a et un deuxième détecteur thermique 10b comprenant chacun un scellement fixé à respectivement la patte de déconnexion thermique 121a, 121b de la première et deuxième varistance 1a, 1b se descellant au-delà d'une température prédéterminée de sécurité.

Dans ce mode de réalisation, le premier détecteur thermique 10a et le deuxième détecteur thermique 10b comprennent chacun une première patte de retenue 101a scellée à la première patte de déconnexion thermique 121a et une deuxième patte de retenue 101b différente de la première patte de retenue 101a, scellée avec le scellement (non représenté) à la deuxième patte de déconnexion thermique121b.

Chaque patte de retenue 101a, 101b est dans cet exemple de type cosse pour diminuer les coûts, mais pourrait avoir une autre forme, par exemple en équerre.

Le scellement est conçu pour se desceller à une température prédéterminée, par exemple une température comprise entre 170 et 250°C. Le scellement peut être par une soudure ou une brasure ou encore un collage par exemple une colle ou un ruban adhésif.

Le scellement est en l'occurrence réalisé par une brasure, en particulier une brasure eutectique.

Le scellement peut aussi être une soudure eutectique comprenant 99,25% d'étain et 0,75% de cuivre ou autres.

L'appareil électrique contre les surtensions transitoires A comprend en outre une première borne de liaison électrique A12 et une deuxième borne de liaison électrique A13 destinées à être chacune reliée indépendamment à un réseau d'alimentation ou à la terre et aux varistances de l'ensemble varistances 1ab. En l'occurrence les deux bornes de connexion sont en cuivre.

La première borne de liaison électrique A12 comprend un premier et un deuxième bras de contact A120a, A120b s'étendant dans le logement A1 pour former avec chaque première borne de connexion 120a, 120b un contact d'alimentation. Le fait d'avoir deux contacts d'alimentations par la première borne de liaison permet dans ce mode de réalisation de faciliter la déconnexion expliquée ensuite en cas d'arc électrique. En effet, l'arc électrique peut provoquer une force de retenu du contact d'alimentation en positon fermé. Selon un autre mode de réalisation non représenté, le fait d'avoir deux contacts d'alimentations par la première borne de liaison permet d'ouvrir un seul des deux contacts d'alimentation, pour déconnecter la varistance ayant eu une patte de déconnexion thermique descellée de la patte de retenue 101a, 101b.

Chaque première borne de connexion 120a, 120b est donc en contact avec un des deux bras A120a, A120b correspondants. Autrement dit, un bras A120a est en contact avec la première borne de connexion 120a de la plaque de contact latérale 12a de la première varistance 1a et l'autre bras A120b est en contact avec la première borne de connexion120b de la plaque de contact latérale 12b de la deuxième varistance 1 b. La deuxième borne de connexion A13 comprend une partie connectique A130 s'étendant dans le logement en prise avec la deuxième borne de connexion 130 de l'ensemble de varistances 1ab.

L'appareil électrique contre les surtensions transitoires A comprend en outre un dispositif de protection thermique 2 dans le logement A1. Le dispositif de protection thermique 2 comprend une première zone de déclenchement destinée à se déclencher lorsque le scellement du premier détecteur thermique 10a se descelle et une deuxième zone de déclenchement différente de la première zone de déclenchement, à se déclencher lorsque le scellement du deuxième détecteur thermique 10b se descelle. Le dispositif de protection thermique 2 est en outre agencé pour que si la première patte de retenue 101a se descelle ou la deuxième patte de retenue 101b se descelle, respectivement de la première ou la deuxième patte de déconnexion thermique 121a, 121b, le dispositif de protection thermique 2 provoque le déplacement respectivement du premier bras de contact mobile A120a ou du deuxième bras de contact mobile A120b de la position initiale à une position déconnectée dans laquelle respectivement le premier bras de contact mobile A120a ou le deuxième bras de contact mobile A120b est déconnecté de la première borne de connexion 120a de respectivement la première ou la deuxième varistance 1a, 1b.

En l'occurrence dans ce mode de réalisation, si la première patte de retenue 101a se descelle ou la deuxième patte de retenue 101b se descelle, le dispositif de protection thermique 2 provoque le déplacement du premier bras de contact mobile A120a et du deuxième bras de contact mobile A120b de la position initiale à la position déconnectée.

Autrement dit, dans ce mode de réalisation, si une varistance 1a, 1b a une température représentant une défaillance de la varistance, la patte de protection thermique 121a, 121b de la varistance défaillante 1a, 1b se descelle de la patte de retenue 101a, 101b correspondante et le dispositif de protection thermique ouvre le contact d'alimentation des deux varistances.

Selon un autre mode de réalisation non représenté, si la première patte de retenue 101a se descelle, le dispositif de protection thermique 2 provoque uniquement l'ouverture du contact d'alimentation entre le premier bras de contact mobile A120a en contact avec la première borne de connexion de la première varistance 1a, de la position initiale à la position déconnectée et si la deuxième patte de retenue 101b se descelle, le dispositif de protection thermique 2 provoque uniquement l'ouverture du contact d'alimentation entre le deuxième bras de contact mobile A120b en contact avec la première borne de connexion de la deuxième varistance 1ab, de la position initiale à la position déconnectée. Par exemple, le dispositif de protection thermique 2 provoque uniquement l'ouverture d'un des deux contacts d'alimentation en déplaçant ou libérant le bras de contact mobile A120a, A120b, pour qu'il soit éloigné de la borne de connexion120a, 120b de la varistance 1a, 1b correspondante.

Autrement dit, dans ce mode de réalisation non représenté, si une varistance 1a, 1b a une température représentant une défaillance de la varistance, la patte de protection thermique 121a, 121b de la varistance défaillante 1a, 1b, se descelle de la patte de retenue 101a, 101b correspondante et le dispositif de protection thermique ouvre uniquement le contact d'alimentation de la varistance défaillante, l'autre varistance reste donc alimentée par son contact d'alimentation.

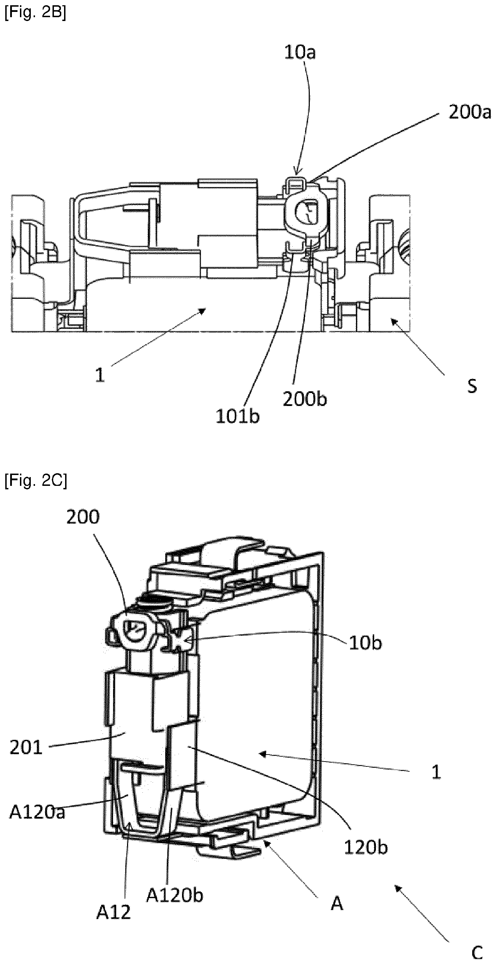

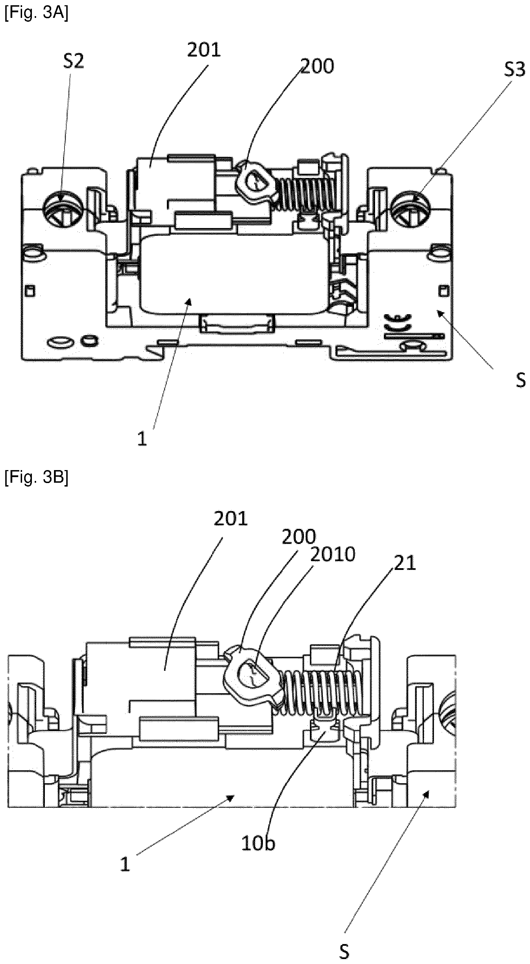

Dans ce mode de réalisation, représenté, le dispositif de protection thermique 2 comprend notamment un cavalier 20 mobile entre une position initiale, représentée sur les figures 2A, 2B, et 2C, dans lequel le cavalier 20 comprend la première et la deuxième zone de déclenchement qui sont en l'occurrence des butées 200a, 200b en contact respectivement avec les pattes de retenues 101a, 101b scellées chacune à la patte de déconnexion thermique 121a, 121b correspondante et une position déconnectée, représentée sur les figures 3A, 3B dans laquelle le cavalier 20 est agencé pour ouvrir les contacts d'alimentations des varistances 1a, 1b et dans laquelle une des pattes de retenue 101a, 101b est descellée de la patte de déconnexion thermique 121a, 121b correspondante.

Dans le cas du mode de réalisation non représenté, le dispositif de protection thermique 2 comprend un cavalier mobile par contact d'alimentation, entre une position initiale et une position déconnectée, dans laquelle chaque cavalier est monté comprimer par un ressort en position initiale et comprend une zone de déclenchement, qui peut être une butée en contact avec la patte de retenue scellée à la patte de protection thermique de la varistance correspondante, alimentée par son contact d'alimentation. Lorsque la patte de retenue se descelle de la patte de protection thermique de la varistance, le ressort se détend et déplace le cavalier vers une position déconnectée ouvrant le contact d'alimentation de la varistance correspondante.

Selon l'exemple du mode de réalisation représenté, les pattes de retenue 101a, 101b sont scellées chacune respectivement sur une surface de la patte de déconnexion thermique 121a, 121b correspondante à l'opposé des butées 200a, 200b du cavalier 20. Cela permet de diminuer le risque de blocage du déplacement du cavalier 20 par la patte de retenue 101a, 101b descellée tout en réduisant le volume de l'appareil. En l'occurrence la surface de chaque patte de déconnexion thermique 121a, 121b sur laquelle est scellée la patte de retenue 101a, 101b correspondante est une surface externe et donc les butées 200a, 200b sont situées entre les pattes de déconnexion thermique 121a, 121b. Chaque patte de retenu 101a, 101b comprend donc dans cet exemple une base scellée et un ergot s'étendant de la base vers l'intérieur soit vers les butées 200a, 200b. En l'occurrence chaque ergot s'étend de la base au-dessus de l'extrémité de la patte de déconnexion thermique 121a, 121b pour permettre d'augmenter la course du cavalier 20 et en outre peut permettre de guider la patte de retenue 101a,101b sur la patte de déconnexion thermique 121a, 121b lors du scellement.

Selon un autre exemple non représenté de ce mode de réalisation, l'ergot s'étend de la base vers la butée correspondante le long d'un bord de la patte de déconnexion thermique 121a, 121b entre celle-ci et les bornes de connexion 120a, 120b ou l'appui d'un moyen élastique 21 expliqué dans la suite en détail. Selon une mise en oeuvre non représenté, et en particulier pour l'exemple non représenté, la butée ou/et l'ergot a une surface de contact en biseau pour que la force exercée des butées sur chaque patte de retenue comprend une composante vers l'extérieur pour écarter les pattes de retenue 10a, 10b des butées 200a, 200b pour ne pas empêcher le déplacement du cavalier 20 vers la position de déconnexion lors d'un descellement.

Le cavalier 20 est de préférence dans une matière isolante électriquement.

Selon un autre exemple non représenté, le cavalier 20 est dans une matière conductrice électriquement.

La résistance électrique de contact entre chaque bras de contact A120a, A120b et la première borne de connexion 120a, 120b est dans ces deux exemples, inférieure à la résistance électrique entre le dispositif de protection thermique 2 et les pattes de protection thermique 121a, 121b.

Le cavalier mobile 20 est, dans ce mode de réalisation, monté comprimé dans la position initiale et est donc retenu par les pattes de retenues 101a, 101b. Lorsqu'une des pattes de retenues 20a, 20b est descellée, le cavalier mobile 20 se déplace vers sa position déconnectée en éloignant chaque bras de contact A120a, A120b de la borne de liaison A12 de la première borne de connexion 120a, 120b correspondante pour ouvrir les contacts d'alimentation des varistances 1a, 1b.

Le dispositif de protection thermique 2 comprend en outre le moyen élastique 21, par exemple un ressort de déplacement. Dans cet exemple, le moyen élastique 21 est, monté comprimé entre le cavalier 20 et une paroi d'appui du boitier 3 de l'appareil électrique contre les surtensions transitoires A.

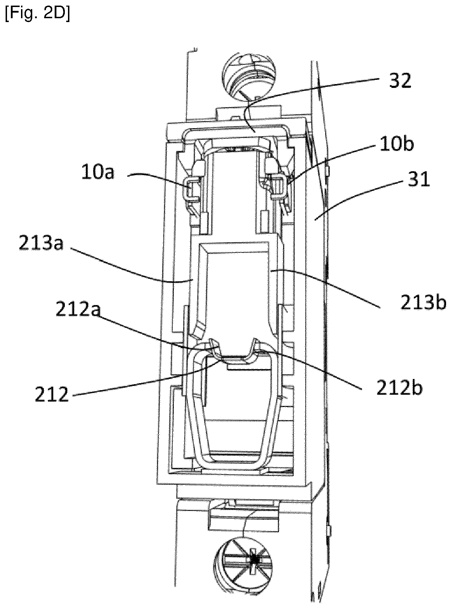

La figure 2D représente une vue en coupe du dispositif de protection thermique 2.

Dans cet exemple de ce mode de réalisation, les bras de contact A120a, A120b sont montés en position initiale (en position connectée) en contact avec les premières bornes de connexion 120a, 120b en étant élastiquement déformés par le cavalier 20 exerçant une force sur les bras de contact A120a, A120b vers les premières bornes de connexion 120a, 120b et en ce que lors du déplacement de la position initiale à la position déconnectée, le cavalier 20 libère chaque bras de contact A120a, A120b qui revient dans leur forme initiale avant déformation élastique en s'écartant chacun de la première borne de connexion 120a, 120b correspondante.

Dans le cas du mode de réalisation représenté, les bras de contact A120a, A120b sont montés en position initiale (en position connectée) en contact avec les premières bornes de connexion 120a, 120b en étant, chacun élastiquement déformés par le cavalier correspondant exerçant une force sur le bras de contact A120a, A120b correspondant vers la première borne de connexion 120a, 120b correspondante.

En l'occurrence, dans cette mise en oeuvre de ce mode de réalisation représenté, le cavalier 20 comprend un écarteur 212 agencé en position initiale pour écarter les bras de contact A120a, A120b vers les premières bornes de connexion 120a, 120b. L'écarteur 212 peut être conductible électriquement. L'écarteur 212 comprend en l'occurrence des bras d'écarteur 212a , 212b pour écarter chaque bras de contact A120a, A120b vers les premières bornes de connexion 120a, 120b.

L'écarteur 212 a en l'occurrence une forme de trapèze dont les bras d'écarteurs 212a ,212b sont inclinées pour faciliter le montage de l'écarteur entre les deux bras de contact A120a, A120b mais pourrait être inversé pour faciliter le déplacement du cavalier 20 de la position initiale vers la position déconnectée. L'écarteur 212 de cet exemple se déforme élastiquement lors du déplacement du cavalier 20 de la position initiale vers la position déconnectée pour libérer les deux bras de contact A120a, A120b. La force exercée par le moyen élastique 21 sur le cavalier 20 permet de déformer ces bras d'écarteurs 212a, 212b de l'écarteur 212.

En outre, dans cet exemple, le cavalier 20 comprend un premier et un deuxième écran 213a, 213b agencés pour être, dans la position déconnectée, chacun situé entre respectivement le premier, deuxième bras de contact A120a, A120b et les premières bornes de connexion 120a, 120b.

Dans le cas du mode de réalisation non représenté, chaque cavalier peut avoir son écran pour être situé en position déconnectée, entre le bras de contact et la première borne de connexion de la varistance correspondante.

Le premier et le deuxième écran 213a et 213b sont en matière isolante électriquement permettant ainsi d'isoler électriquement (même en cas d'arc électrique) le premier, deuxième bras de contact A120a, A120b des premières bornes de connexion 120a, 120b.

Le cavalier 20 comprend un espace entre le premier et le deuxième écran 213a et 213b pour recevoir les bras de contact A120a, A120b en position déconnectée.

Dans cette mise en oeuvre, le premier et le deuxième écran 213a et 213b comprend un biseau a son extrémité pouvant permettre d'aider à s'insérer entre respectivement le premier, deuxième bras de contact A120a, A120b et les premières bornes de connexion 120a, 120b lors du déplacement de la position initiale à la position déconnectée du cavalier 20, notamment en cas d'arc électrique exerçant une force de retenu sur les bras de contact A120a, A120b vers la position initiale, c'est-à-dire une position connectée.

En position déconnectée, dans cet exemple, le premier et le deuxième écran 213a et 213b comprennent chacun une portion le long de la première borne de connexion 120a, 120b correspondante permettant ainsi de guider le cavalier 20 lors de son déplacement.

Selon un autre exemple non représenté, le moyen élastique 21 a des propriétés élastiques pour qu'en position de déconnexion la force exercée par le moyen élastique permettant au cavalier 20 de déformer les bras de contact A120a, A120b pour les écarter chacun de la première borne de connexion 120a, 120b correspondante. Dans ce cas, soit les bras de contact A120a, A120b peuvent être montés déformés élastiquement, tel que chaque bras de contact exerce une force vers la borne de connexion 120a, 120b correspondante et le cavalier 20 peut ainsi être dépourvu d'écarteur. Cependant dans cet exemple, le moyen élastique 21 doit avoir une force plus importante que dans l'exemple représenté et une force suffisante pour s'écarter en cas d'arc électrique le retenant en position initiale.

En l'occurrence, le moyen élastique comprend deux ressorts 210, 211 montés de façon coaxiale entre la paroi d'appui et le cavalier 20.

Le boîtier 3 comprend dans cet exemple un cache 32 comprenant la paroi d'appui du moyen élastique. Le cache 32 est monté amovible sur le boitier 3, en l'occurrence monté par clipsage dans une fenêtre d'une paroi du couvercle 31. Le clipse est visible notamment sur la figure 2d. Le boitier 3 comprend en outre une manette 35 pivotante par rapport au couvercle 31 permettant d'avoir accès au cache 32. En outre cette manette 35 peut permettre à l'installateur de retirer la cassette C pour faciliter le changement de la cassette C.

Ainsi, il est possible d'insérer le dispositif de varistances à détection d'emballement thermique 1, et remonter le cavalier 20 dans sa position initiale avant insertion du moyen élastique dans le logement A1 du boîtier 3. Cela permet ainsi de pouvoir retirer un dispositif de varistances à détection d'emballement thermique 1 ayant un scellement descellé dû à une température de la patte de protection thermique de l'ensemble de varistances ayant atteint la température prédéterminée de sécurité.

Dans cet exemple de ce mode de réalisation, le cavalier 20 comprend un verrou rotatif 200 comprenant les deux butées en appui sur les deux pattes de retenu 121a, 121b en position initiale et un séparateur isolant 201 sur lequel est monté le verrou rotatif 200. Le séparateur isolant 201 comprend en l'occurrence les premier et deuxième écrans 213a, 213b. Le séparateur isolant 201 comprend un logement comprenant le moyen de rappel 21 comprimé en position initiale. Ainsi cela permet d'isoler le moyen de rappel afin d'éviter que des arcs électriques se produisent avec celui-ci.

Les deux buttées du verrou rotatif 200 sont situées à l'opposée l'une de l'autre et le moyen élastique exerce une force sur une zone du cavalier entre ces deux butées. En l'occurrence le moyen élastique 21 exerce une force sur le séparateur isolant 201 qui comprend un axe de pivotement 2010 (référencé sur les figures 1 et 3B) et en ce que le verrou rotatif 200 comprend une ouverture dans laquelle est insérée l'axe de pivotement 2010.

L'ouverture du verrou rotatif 200 et l'axe de pivotement 2010 permet, en position initiale, au verrou rotatif 200 de retenir le séparateur isolant 201 et permet le déplacement du cavalier 20 de sa position initiale vers la position déconnectée en pivotant le verrou rotatif 200 par rapport à l'axe de pivotement 2010 lorsqu'une butée 200a, 200b du verrou rotatif 200 est libérée par le descellement de la patte de retenue 101a,101b de la première varistance 1a ou de la deuxième varistance 1b.

Ainsi, lorsqu'une des deux pattes de retenu 101a, 101b se descelle de la patte de déconnexion thermique 121a, 121b correspondant, elle tombe et ne retient plus le verrou rotatif 200 qui tourne par rapport au séparateur isolant 201 du fait qu'il ne comporte qu'une butée en appuie sur l'autre pattes de retenu 101b, 101a scellée.

Les figures 3A et 3B représentent une vue en perspective d'une partie du parasurtenseur P dans la position déconnectée.

Dans ces figures, on peut voir que la première patte de retenu 101a est descellée de la première patte de déconnexion thermique 121a et le moyen de rappel 21 est mi-contraint ou détendu, le verrou rotatif 200 ayant pivoté angulairement n'est plus en buté contre les pattes de retenue 101a, 101b. Le séparateur isolant 201 est donc en position déconnectée en ayant son premier écran 213a situé entre le premier bras de contact A120a et la première borne de connexion 120a de la première varistance 1a ainsi que son deuxième écran 213b situé entre le deuxième bras de contact A120b et la première borne de connexion 120b de la deuxième varistance 1b.

Le parasurtenseur comprend en outre un socle S présentant, à sa base, une semelle de fixation S1 adaptée à en permettre la fixation sur un rail du type dit en chapeau.

Le socle S formé, dans la forme de cet exemple de ce mode de réalisation représentée, comprend deux coquilles S11, S11' face à face l'une à l'autre et convenablement liées l'une à l'autre par un moyen de fixation tel que des vis ou des rivets.

Le socle S comprend en outre une première et une deuxième borne de raccordement de phase S2, S3 pour être chacune raccordée au réseau ou à la terre et en outre être connectée respectivement avec la première borne de liaison électrique A12 et la deuxième borne de liaison électrique A13 par exemple par enfichage. Ainsi il est possible de rendre amovible la cassette C pour la remplacer par une autre cassette C en cas d'un ensemble de varistances 1 déconnectée.

L'appareil électrique contre les surtensions transitoires A comprend en outre dans cet exemple de ce mode de réalisation un indicateur d'états 6 de l'ensemble de varistances, monté solidaire du cavalier 20, en l'occurrence clipsé sur le séparateur isolant 201. L'indicateur d'états 6 comprend deux marques d'indications d'états, une marque d'état de marche, par exemple une marque verte et une marque d'état hors service, par exemple une marque rouge. Le boîtier 3 comprend une fenêtre d'identification 36 pour permettre à l'utilisateur de voir une des deux marques de l'indicateur d'état 6. Ainsi à l'état initial, la fenêtre d'identification 36 est située en vis-à-vis de la marque d'état de marche et en position déconnectée, le cavalier 20 s'étant déplacer, l'indicateur d'états 6 a sa marque d'état hors service en vis-à-vis de la fenêtre d'identification 36. L'appareil électrique contre les surtensions transitoires A peut comprend un cache de protection A6 avant installation permettant de protéger le dispositif de protection thermique 2 contre des intrusions d'éléments externe par la fenêtre d'identification 36.

Sauf précision contraire, un même élément apparaissant sur des figures différentes présente une référence unique.

## Revendications

1. Appareil électrique contre les surtensions transitoires (A) comprenant :
∘ un logement (A1) destiné à recevoir un dispositif de varistances à détection d'emballement thermique (1) comprenant au moins un ensemble de varistances(1ab) comprenant une première varistance (1a) et une deuxième varistance (1b),
- une première borne de liaison électrique (A12) destinée à être reliée indépendamment à un réseau d'alimentation ou à la terre, comprenant :
∘ un premier bras de contact mobile (A120a) s'étendant dans le logement dans une position initiale pour être en contact avec une première borne de connexion électrique (120a) de la première varistance (1a),
∘ un deuxième bras de contact mobile (A120b) s'étendant dans le logement dans une position initiale pour être en contact à une première borne de connexion électrique (120b) de la deuxième varistance (1b),
- un dispositif de protection thermique (2), **caractérisé en ce qu'**il comprend:
∘ une première zone de déclenchement (200a) destinée à se déclencher lorsqu'un scellement d'un premier détecteur thermique (10a) de l'ensemble varistance se descelle et pour provoquer le déplacement du premier bras de contact mobile (A120a) de la position initiale à une position déconnectée dans laquelle le premier bras de contact mobile est destiné à se déconnecter de la première borne de connexion (120a) de la première varistance,
∘ une deuxième zone de déclenchement (200b) différente de la première zone de déclenchement (200a), apte à se déclencher lorsque un deuxième scellement d'un deuxième détecteur thermique (10b) se descelle, pour provoquer le déplacement du deuxième bras de contact mobile (A120b) dans une position déconnectée dans laquelle le deuxième bras de contact mobile est destiné à se déconnecter de la première borne de connexion (120b) de la deuxième varistance (1b)
∘ dans lequel chaque zone de déclenchement est dissociée de la borne de connexion électrique de chaque varistance.

2. Appareil électrique contre les surtensions transitoires (A) selon la revendication précédente, dans lequel : le déclenchement d'une des deux zones de déclenchement entraine la déconnexion électrique de l'ensemble des varistances en déplaçant chaque bras mobile de contact vers la position déconnectée.

3. Appareil électrique contre les surtensions transitoires (A) selon la revendication 1 ou 2, dans lequel la première borne de liaison électrique (A12) comprend une épingle comprenant une partie centrale destinée à être reliée à une première borne de raccordement de phase (S2) pour être reliée au réseau ou à la terre et en ce que chaque bras de contact mobile (A120a, A120b) par varistance (1a, 1b), est contraint élastiquement en position initiale, qui est connectée avec la première borne de connexion, et en ce que le dispositif de protection thermique est agencé pour libérer chaque bras mobile de la borne de connexion de la varistance (1a, 1b) correspondante en position déconnectée lors du déclenchement de la zone de déclenchement correspondante .

4. Appareil électrique contre les surtensions transitoires (A) selon la revendication précédente, dans lequel chaque bras de contact mobile (A120a, A120b) est déformé élastiquement par le dispositif de protection thermique (2) en position initiale et en ce que le déplacement du dispositif de protection (2) thermique, lors du déclenchement correspondant, libère le bras de contact mobile (A120a, A120b) correspondant en position déconnectée, en revenant dans sa forme initiale dans la position déconnectée.

5. Dispositif de varistances à détection d'emballement thermique (1) pour un appareil électrique contre les surtensions transitoires (A) selon l'une des revendications 1 à 4, le dispositif de varistance à détection d'emballement thermique (1) comprenant :
- un ensemble de varistances (1ab) comprenant :
∘ une première et deuxième varistance (1a, 1b) comprenant chacune indépendamment une patte de déconnexion thermique (121a, 121b) et une première borne de connexion (120a, 120b) distinctes des pattes de déconnexion thermique (121a, 121b),
∘ la première borne de connexion (120a) de la première varistance (1a,) étant destinée à être connectée au premier bras de contact mobile (A120a) de la première borne de liaison électrique de l'appareil électrique contre les surtensions transitoires (A) pour relier la première varistance (1a) au réseau ou la terre de l'installation et
∘ la première borne de connexion (120b) de la deuxième varistance (1b) étant destinée à être connectée au deuxième bras de contact mobile (A120b) de la première borne de liaison électrique de l'appareil électrique contre les surtensions transitoires (A) pour relier la deuxième varistance (1b) au réseau ou la terre de l'installation et
- un premier détecteur thermique (10a) et un deuxième détecteur thermique (10b) comprenant chacun un scellement fixé à respectivement la patte à déconnexion thermique (121a, 121b) de la première et deuxième varistance (1a, 1b) se descellant au-delà d'une température prédéterminée de sécurité.

6. Dispositif de varistances à détection d'emballement thermique (1) selon la revendication précédente, dans lequel l'ensemble de varistances (1ab) comprend par varistance une première plaque de contact (12a, 12b) conductrice électriquement comprenant la patte de déconnexion thermique (121a, 121b) et la première borne de connexion (120a, 120b) de façon distincte l'une de l'autre.

7. Dispositif de varistances à détection d'emballement thermique (1) selon la revendication précédente, dans lequel l'ensemble de varistances (1ab) est une varistance double comprenant :
- un bloc de céramique (11) par varistance,
- une plaque de contact centrale (13) entre les deux blocs de céramique,
- dans lequel la première plaque de contact est une plaque de contact latérale (12) contiguë avec un des deux blocs à l'opposé de la plaque de contact centrale, et la deuxième plaque de contact latérale (12) comprenant la patte de déconnexion thermique (121a, 121b) est contigüe avec l'autre bloc.

8. Dispositif de varistances à détection d'emballement thermique (1) selon la revendication précédente, dans lequel le premier détecteur thermique (10a) et le deuxième détecteur thermique (10b) comprennent en outre chacun respectivement une première et une deuxième patte de retenu (101a, 101b) scellées chacune respectivement à la patte de déconnexion thermique (121a, 121b) de la première et deuxième varistance (1a, 1b) pour se desceller à partir d'une température prédéterminée de sécurité.

9. Cassette d'un parasurtenseur comprenant un appareil électrique contre les surtensions transitoires (A) selon l'une des revendication 1 à 4 et un ensemble de varistances (1) selon l'une des revendications précédentes 5 à 8, monté dans le logement (A1) de l'appareil électrique contre les surtensions transitoires (A), le premier bras de contact mobile et le deuxième bras de contact mobile de la première borne de liaison électrique (A12) étant chacun respectivement dans la position initiale en contact électriquement et physiquement avec la première borne de connexion (120a, 120b) de la première et deuxième varistance (1a, 1b) et en ce que le premier détecteur thermique (10a) et le deuxième détecteur thermique (10b) sont chacun agencé avec respectivement la première zone de déclenchement (200a) et la deuxième zone de déclenchement (200b) se déclenchant chacun lorsque respectivement le scellement du premier détecteur thermique (10a) provoquant le déplacement du premier bras de contact mobile (A120a) dans la position déconnectée pour se déconnecter de la première borne de la première varistance, et le scellement du deuxième zone de déclenchement (200b) se descelle provoquant le déplacement du premier bras de contact mobile (A120a) dans la position déconnectée pour se déconnecter de la première borne de la deuxième varistance de la première borne de liaison électrique.

10. Parasurtenseur comprenant un socle (S) et une cassette selon la revendication précédente, monté sur le socle (S), le socle S comprenant des bornes de branchement en contact physiquement et électriquement avec les bornes de liaisons pour reliées les bornes de liaisons au réseau électrique.

11. Procédé de déconnexion électrique d'un ensemble de varistances de la cassette (1) selon la revendication 9 :
- une étape de déscellement du premier ou deuxième détecteur thermique (10a, 10b),
- suite à l'étape de déscellement, une étape de déclenchement respectivement de la première ou la deuxième zone de déclenchement du dispositif de protection thermique (2), et
- une étape de déconnexion électrique de la première borne de connexion de respectivement la première ou deuxième varistance de la première borne de liaison électrique en déplaçant respectivement le premier ou deuxième bras mobile de contact de la position initiale à la position déconnectée.

## Patentansprüche

1. Elektrisches Gerät gegen transiente Überspannungen (A) umfassend:
∘ ein Gehäuse (A1) zur Aufnahme einer Varistoranordnung zur Detektion eines thermischen Durchgehens (1), die mindestens eine Varistoranordnung (1ab) mit einem ersten Varistor (1a) und einem zweiten Varistor (1b) umfasst,
- einen ersten elektrischen Verbindungsanschluss (A12), der dazu bestimmt ist, unabhängig mit einem Stromnetz oder der Erdung verbunden zu werden, mit:
∘ einem ersten beweglichen Kontaktarm (A120a), der sich in einer Ausgangsposition in das Gehäuse erstreckt, um mit einer ersten elektrischen Verbindungsklemme (120a) des ersten Varistors (1a) in Kontakt zu kommen,
∘ einem zweiten beweglichen Kontaktarm (A120b), der sich in einer Ausgangsposition in das Gehäuse erstreckt, um mit einer ersten elektrischen Verbindungsklemme (120b) des zweiten Varistors (1b) in Kontakt zu kommen,
- eine Wärmeschutzvorrichtung (2), **dadurch gekennzeichnet, dass** sie Folgendes umfasst:
∘ einen ersten Auslösebereich (200a), der dazu bestimmt ist, ausgelöst zu werden, wenn sich eine Versiegelung eines ersten thermischen Detektors (10a) der Varistoranordnung löst, und um eine Bewegung des ersten beweglichen Kontaktarms (A120a) von der Ausgangsposition in eine getrennte Position zu bewirken, in der der erste bewegliche Kontaktarm dazu bestimmt ist, sich von der ersten Verbindungsklemme (120a) des ersten Varistors zu trennen,
∘einen zweiten Auslösebereich (200b), der sich von dem ersten Auslösebereich (200a) unterscheidet und geeignet ist, ausgelöst zu werden, wenn sich eine zweite Versiegelung eines zweiten thermischen Detektors (10b) löst, um die Bewegung des zweiten beweglichen Kontaktarms (A120b) in eine getrennte Position zu bewirken, in welcher der zweite bewegliche Kontaktarm dazu bestimmt ist, sich von der ersten Verbindungsklemme (120b) des zweiten Varistors (1b) zu trennen
∘ wobei jeder Auslösebereich von der elektrischen Verbindungsklemme jedes Varistors getrennt ist.

2. Elektrisches Gerät gegen transiente Überspannungen (A) nach vorhergehendem Anspruch, bei dem das Auslösen einer der beiden Auslösebereiche die elektrische Trennung der gesamten Varistoren bewirkt, indem jeder bewegliche Kontaktarm in Richtung der getrennten Position bewegt wird.

3. Elektrisches Gerät gegen transiente Überspannungen (A) nach Anspruch 1 oder 2, bei dem der erste elektrische Verbindungsanschluss (A12) eine Nadel mit einem Mittelteil zur Verbindung mit einem ersten Phasenanschluss (S2), um mit dem Stromnetz oder der Erdung verbunden zu werden, umfasst, und bei dem jeder bewegliche Kontaktarm (A120a, A120b) pro Varistor (1a, 1b) elastisch in eine Ausgangsposition gezwungen wird, die mit dem ersten Verbindungsanschluss verbunden ist, und bei dem die thermische Schutzvorrichtung so angeordnet ist, dass sie jeden beweglichen Arm von dem Verbindungsanschluss des entsprechenden Varistors (1a, 1b) in der getrennten Position beim Auslösen des entsprechenden Auslösebereichs freigibt.

4. Elektrisches Gerät gegen transiente Überspannungen (A) nach dem vorhergehenden Anspruch, bei dem jeder bewegliche Kontaktarm (A120a, A 120b) durch die thermische Schutzvorrichtung (2) elastisch in die Ausgangsposition verformt wird und die Bewegung der thermischen Schutzvorrichtung (2) bei der entsprechenden Auslösung den entsprechenden beweglichen Kontaktarm (A120a, A 120b) in der getrennten Position freigibt, indem er in der getrennten Position in seine ursprüngliche Form zurückkehrt.

5. Varistoranordnung mit Detektion des thermischen Durchgehens (1) für ein elektrisches Gerät gegen transiente Überspannungen (A) nach einem der Ansprüche 1 bis 4, wobei die Varistoranordnung mit Detektion des thermischen Durchgehens (1) umfasst:
- eine Varistoranordnung (1ab), umfassend:
∘ einen ersten und einen zweiten Varistor (1a, 1b), die jeweils unabhängig voneinander eine thermische Trennungslasche (121a, 121b) und eine erste Verbindungsklemme (120a, 120b) umfassen, die sich von den thermischen Trennungslaschen (121a, 121b) unterscheiden,
∘ wobei die erste Verbindungsklemme (120a) des ersten Varistors (1a,) dazu bestimmt ist, mit dem ersten beweglichen Kontaktarm (A120a) des ersten elektrischen Verbindungsanschlusses des elektrischen Geräts gegen transiente Überspannungen (A) verbunden zu werden, um den ersten Varistor (1a) mit dem Stromnetz oder der Erdung der Anlage zu verbinden, und
∘ wobei die erste Verbindungsklemme (120b) des zweiten Varistors (1b) dazu bestimmt ist, mit dem zweiten beweglichen Kontaktarm (A120b) des ersten elektrischen Verbindungsanschlusses des elektrischen Geräts gegen transiente Überspannungen (A) verbunden zu werden, um den zweiten Varistor (1b) mit dem Stromnetz oder der Erdung der Anlage zu verbinden, und
- einen ersten thermischen Detektor (10a) und einen zweiten thermischen Detektor (10b), die jeweils eine Versiegelung umfassen, die jeweils an der thermischen Trennungslasche (121a, 121 b) des ersten und zweiten Varistors (1a, 1b) befestigt ist und sich über eine vorbestimmte Sicherheitstemperatur hinaus herauslöst.

6. Varistoranordnung zur Detektion eines thermischen Durchgehens (1) nach dem vorhergehenden Anspruch, bei der die Varistoranordnung (1ab) pro Varistor eine erste elektrisch leitende Kontaktplatte (12a, 12b) umfasst, die die thermische Trennungslasche (121a, 121b) und die erste Verbindungsklemme (120a, 120b) getrennt voneinander umfasst.

7. Varistoranordnung zur Detektion eines thermischen Durchgehens (1) nach dem vorhergehenden Anspruch, bei der die Varistoranordnung (1ab) ein Doppelvaristor ist, der Folgendes umfasst:
- einen Keramikblock (11) pro Varistor,
- eine mittlere Kontaktplatte (13) zwischen den beiden Keramikblöcken,
- wobei die erste Kontaktplatte eine seitliche Kontaktplatte (12) ist, die an einen der beiden Blöcke gegenüber der mittleren Kontaktplatte angrenzt, und die zweite seitliche Kontaktplatte (12), die die thermische Trennungslasche (121a, 121b) umfasst, an den anderen Block angrenzt.

8. Varistoranordnung (1) zur Detektion eines thermischem Durchgehens nach dem vorhergehenden Anspruch, bei der der erste thermische Detektor (10a) und der zweite thermische Detektor (10b) außerdem jeweils eine erste und eine zweite Rückhaltelasche (101a, 101b) umfassen, die jeweils an der thermischen Trennlasche (121a, 121b) des ersten und zweiten Varistors (1a, 1b) versiegelt sind, um sich ab einer vorbestimmten Sicherheitstemperatur herauszulösen.

9. Kassette eines Überspannungsschutzes mit einem elektrischen Gerät gegen transiente Überspannungen (A) nach einem der Ansprüche 1 bis 4 und eine Varistoranordnung (1) nach einem der vorhergehenden Ansprüche 5 bis 8, die in dem Gehäuse (A1) des elektrischen Geräts gegen transiente Überspannungen (A) montiert ist, wobei der erste bewegliche Kontaktarm und der zweite bewegliche Kontaktarm des ersten elektrischen Verbindungsanschlusses (A12) jeweils in der Ausgangsposition in elektrischem und physischem Kontakt mit der ersten Verbindungsklemme (120a, 120b) des ersten und des zweiten Varistors (1a, 1b) stehen, und wobei der erste thermische Detektor (10a) und der zweite thermische Detektor (10b) jeweils mit dem ersten Auslösebereich (200a) und dem zweiten Auslösebereich (200b) angeordnet sind, die jeweils ausgelöst werden, wenn jeweils die Versiegelung des ersten thermischen Detektors (10a) die Bewegung des ersten beweglichen Kontaktarms (A120a) in die getrennte Position bewirkt, um sich von der ersten Klemme des ersten Varistors zu trennen, und die Versiegelung des zweiten Auslösebereichs (200b) sich herauslöst, was bewirkt, dass sich der erste bewegliche Kontaktarm (A120a) in die getrennte Position bewegt, um sich von der ersten Klemme des zweiten Varistors des ersten elektrischen Verbindungsanschlusses zu trennen.

10. Überspannungsschutz mit einem Sockel (S) und einer Kassette nach dem vorhergehenden Anspruch, die auf dem Sockel (S) montiert ist, wobei der Sockel S Verzweigungsanschlüsse aufweist, die in physischem und elektrischem Kontakt mit den Verbindungsanschlüssen stehen, um die Verbindungsanschlüsse mit dem Stromnetz zu verbinden.

11. Verfahren zur elektrischen Trennung einer Varistoranordnung von der Kassette (1) nach Anspruch 9:
- einen Schritt des Herauslösens des ersten oder zweiten thermischen Detektors (10a, 10b),
- nach dem Herauslösen einen Schritt des Auslösens von jeweils des ersten oder zweiten Auslösebereichs der thermischen Schutzvorrichtung (2), und
- einen Schritt der elektrischen Trennung der ersten Verbindungsklemme vom ersten bzw. vom zweiten Varistor des ersten elektrischen Verbindungsanschlusses durch Bewegen des ersten bzw. zweiten beweglichen Kontaktarms von der Ausgangsposition in die getrennte Position.

## Claims

1. Electrical device against transient overvoltages (A) comprising:
∘ a housing (A1) intended to receive a varistor device for detecting thermal runaway (1) comprising at least one set of varistors (1ab) comprising a first varistor (1a) and a second varistor (1b),
- a first electrical junction terminal (A12) intended to be connected independently to a power grid or to the ground, comprising:
∘ a first movable contact arm (A120a) extending in the housing in an initial position to be in contact with a first electrical connecting terminal (120a) of the first varistor (1a),
∘ a second movable contact arm (A120b) extending in the housing in an initial position to be in contact with a first electrical connecting terminal (120b) of the second varistor (1b),
- a thermal protection device (2) **characterized in that** it comprises:
∘ a first trip zone (200a) intended to be tripped when a sealing of a first thermal detector (10a) of the varistor set is unsealed, to cause the displacement of the first movable contact arm (A120a) from the initial position to a disconnected position wherein the first movable contact arm is intended to disconnect from the first connecting terminal (120a) of the first varistor,
∘ a second trip zone (200b) different from the first trip zone (200a), able to be tripped, when the sealing of the second thermal detector (10b) is unsealed, to cause the displacement of the second movable contact arm (A120b) in a disconnected position wherein the second movable contact arm is intended to disconnect from the first electrical connecting terminal (120b) of the second varistor (1b),
oin which each trip zone is dissociated from the electrical connecting terminal of each varistor.

2. Electrical device against transient overvoltages (A) according to the preceding claim, wherein: the tripping of one of the two trip zones results in the electrical disconnection of the set of varistors by displacing each movable contact arm to the disconnected position.

3. Electrical device against transient overvoltages (A) according to claim 1 or 2, wherein the first electrical junction terminal (A12) comprises a pin comprising a central portion intended to be connected to a first phase connection terminal (S2) to be connected to the grid or to the ground and in that each movable contact arm (A120a, A120b) per varistor (1a, 1b), is elastically stressed in the initial position, which is connected with the first connecting terminal and in that the thermal protection device is arranged to release each movable arm from the connecting terminal of the corresponding varistor (1a, 1b) in the disconnected position during the tripping of the corresponding trip zone.

4. Electrical device against transient overvoltages (A) according to the preceding claim, wherein each movable contact arm (A120a, A120b) is elastically deformed by the thermal protection device (2) in the initial position and in that the displacement of the thermal protection device (2), during the corresponding tripping, releases the corresponding movable contact arm (A120a, A120b) in the disconnected position, returning to its initial shape in the disconnected position.

5. Varistor device for detecting thermal runaway (1) for an electrical device against transient overvoltages (A) according to one of claims 1 to 4, the varistor device for detecting thermal runaway (1) comprising:
- a set of varistors (1ab) comprising:
∘ a first and second varistor (1a, 1b) each independently comprising a thermal disconnection tab (121a, 121b) and a first connecting terminal (120a, 120b) separate from the thermal disconnection tabs (121a, 121b),
∘ the first connecting terminal (120a) of the first varistor (1a,) intended to be connected to the first movable contact arm (A120a) of the first electrical junction terminal of the electrical device against transient overvoltages (A) in order to connect the first varistor (1a) to the grid or the ground of the installation and
∘ the first connecting terminal (120b) of the second varistor (1b) being intended to be connected to the second movable contact arm (A120b) of the first electrical junction terminal of the electrical device against transient overvoltages (A) in order to connect the second varistor (1b) to the grid or the ground of the installation and
- a first thermal detector (10a) and a second thermal detector (10b) each comprising a sealing fastened respectively to the thermal disconnection tab (121a, 121b) of the first and second varistor (1a, 1b) that unseals beyond a predetermined safety temperature.

6. Varistor device for detecting thermal runaway (1) according to the preceding claim, wherein the set of varistors (1ab) comprises per varistor a first electrically conductive contact plate (12a, 12b) comprising the thermal disconnection tab (121a, 121b) and the first connecting terminal (120a, 120b) separately from one another.

7. Varistor device for detecting thermal runaway (1) according to the preceding claim, wherein the set of varistors (1ab) is a double varistor comprising:
- a ceramic block (11) per varistor,
- a central contact plate (13) between the two ceramic blocks,
- wherein the first contact plate is a side contact plate (12) contiguous with one of the two blocks opposite the central contact plate, and the second side contact plate (12) comprising the thermal disconnection tab (121a, 121b) is contiguous with the other block.

8. Varistor device for detecting thermal runaway (1) according to the preceding claim, wherein the first thermal detector (10a) and the second thermal detector (10b) each further comprise respectively a first and a second retaining tab (101a, 101b) each sealed respectively to the thermal disconnection tab (121a, 121b) of the first and second varistor (1a, 1b) in order to be unsealed starting from a predetermined safety temperature.

9. Cassette of an arrester comprising an electrical device against transient overvoltages (A) according to one of claims 1 to 4 and a set of varistors (1) according to one of the preceding claims 5 to 8, mounted in the housing (A1) of the electrical device against transient overvoltages (A), the first movable contact arm and the second movable contact arm of the first electrical junction terminal (A12) each being respectively in the initial position in contact electrically and physically with the first connecting terminal (120a, 120b) of the first and second varistor (1a, 1b) and in that the first thermal detector (10a) and the second thermal detector (10b) are each arranged with respectively the first trip zone (200a) and the second trip zone (200b) each being tripped when respectively the sealing of the first thermal detector (10a) causes the displacement of the first movable contact arm (A120a) in the disconnected position to be disconnected from the first terminal of the first varistor, and the sealing of the second trip zone (200b) is unsealed causing the displacement of the first movable contact arm (A120a) in the disconnected position to be disconnected from the first terminal of the second varistor of the first electrical junction terminal.

10. Arrester comprising a base (S) and a cassette according to one of the preceding claims mounted on the base (S), the base (S) comprising connector terminals in contact physically and electrically with the junction terminals to connect the junction terminals to the electrical grid.

11. Method for the electrical disconnection from a set of varistors of the cassette (1) according to one of claims:
- a step of unsealing of the first or second thermal detector (10a, 10b),
- following the step of unsealing, a step of tripping respectively the first zone or the second trip zone of the thermal protection device (2), and
- a step of electrically disconnecting the first connecting terminal of respectively the first or second varistor from the first electrical junction terminal by respectively displacing the first or second movable contact arm from the initial position to the disconnected position.
